# EUROPÄISCHE PATENTSCHRIFT

(11) **EP 3 085 581 B1**
(45) Veröffentlichungstag und Bekanntmachung des Hinweises auf die Patenterteilung: **29.04.2020**
(21) Anmeldenummer: 16159809.9
(22) Anmeldetag: 11.03.2016
(51) Int. Cl.: B60R 9/06, B60R 9/10

(54) **HECKTRÄGERSYSTEM FÜR EIN KRAFTFAHRZEUG**
REAR CARRIER SYSTEM FOR A MOTOR VEHICLE
SYSTEME DE SUPPORT DE TOIT POUR UN VEHICULE AUTOMOBILE

(30) Priorität: 24.04.2015 DE 102015207606
(43) Veröffentlichungstag der Anmeldung: 26.10.2016
(73) Patentinhaber: ATERA GmbH, 88299 Leutkirch im Allgäu (DE)
(72) Erfinder: Pickl, Adolf, 87487 Wiggensbach (DE)
(74) Vertreter: Patentanwälte Ruff, Wilhelm, Beier, Dauster & Partner mbB

(56) Entgegenhaltungen:
- EP-A2- 0 665 135
- WO-A1-2013/121271
- US-A- 2 874 976
- US-B2- 8 006 876

## Beschreibung

Die Erfindung betrifft ein Heckträgersystem für ein Kraftfahrzeug, mit einem Trägerrahmen, und mit einer Kugelkopfhalterung zur Fixierung des Trägerrahmens auf einem Kugelkopf einer Anhängevorrichtung des Kraftfahrzeugs, wobei die Kugelkopfhalterung wenigstens zwei Klemmbacken sowie eine manuell bedienbare Spannvorrichtung umfasst, von denen wenigstens ein Klemmbacken zwischen einer den Kugelkopf freigebenden Öffnungsstellung und einer den Kugelkopf kontaktierenden Schließstellung schwenkbeweglich gelagert ist.

Ein Heckträgersystem nach dem Oberbegriff des Anspruchs 1 ist aus der EP 1 440 846 B1 bekannt. Das bekannte Heckträgersystem weist eine Kugelkopfhalterung auf, die an einem Trägerrahmen befestigt ist. Die Kugelkopfhalterung dient dazu, den Trägerrahmen auf einem Kugelkopf einer Anhängevorrichtung eines Kraftfahrzeugs zu fixieren. Die Kugelkopfhalterung weist zwei einander gegenüberliegende Klemmbacken auf, wobei ein Klemmbacken in der Kugelkopfhalterung stationär und der andere Klemmbacken schwenkbeweglich gelagert ist. Beide Klemmbacken sind als einfache Blechstanzteile mit jeweils einer kreisförmigen Öffnung gestaltet, in die entsprechende Kugelabschnittsflächen des Kugelkopfes bei einer Montage eintauchen. Eine Spannvorrichtung dient dazu, den schwenkbeweglichen Klemmbacken gegen den Kugelkopf zu pressen und in dieser Schließstellung zu sichern. Zur Montage des Heckträgersystems wird der Trägerrahmen mit der Kugelkopfhalterung von oben her an den Kugelkopf der Anhängevorrichtung herangeführt. Dabei befindet sich der schwenkbewegliche Klemmbacken in seiner Öffnungsstellung. Durch das Aufsetzen der Kugelkopfhalterung von oben her auf den Kugelkopf kommt ein oberer Stützschenkel des schwenkbeweglichen Klemmbackens auf dem Kugelkopf zur Anlage, wodurch der Klemmbacken zwangsläufig in eine am Kugelkopf anliegende Schwenkstellung verschwenkt wird. Durch die Spannvorrichtung wird der Klemmbacken in die Schließstellung gepresst, wodurch zwangsläufig der Kugelkopf auch gegen den gegenüberliegenden, feststehenden Klemmbacken gepresst wird. Dabei ragt der Kugelkopf mit gegenüberliegenden Kugelabschnittsflächen in die kreisförmigen Aussparungen der beiden Klemmbacken hinein, wodurch eine formschlüssige Sicherung des Trägerrahmens auf dem Kugelkopf erzielt wird.

Aufgabe der Erfindung ist es, ein Heckträgersystem der eingangs genannten Art zu schaffen, das eine besonders bedienerfreundliche und sichere Montage auf einem Kugelkopf einer Anhängevorrichtung eines Kraftfahrzeugs ermöglicht.

Diese Aufgabe wird dadurch gelöst, dass die wenigstens zwei Klemmbacken in einer am Trägerrahmen festen Führungsstruktur in Hochrichtung verlagerbar angeordnet sind, und dass der Führungsstruktur eine mechanische Zwangsführung zugeordnet ist, die mit dem wenigstens einen schwenkbeweglichen Klemmbacken wirkverbunden ist und eine Bewegung der Klemmbacken in Hochrichtung derart mit einer Schwenkbewegung des wenigstens einen Klemmbackens überlagert, dass der schwenkbewegliche Klemmbacken in einer relativ zu der Führungsstruktur unteren Stellung in der Öffnungsstellung gehalten ist und bei einer Bewegung der Klemmbacken in der Führungsstruktur in Hochrichtung nach oben in die Schließstellung überführt wird. Durch die erfindungsgemäße Lösung wird der wenigstens eine schwenkbewegliche Klemmbacken bereits beim Aufsetzen des Heckträgersystems von oben auf einen entsprechenden Kugelkopf in die Schließstellung überführt. Die Führungsstruktur in Verbindung mit der mechanischen Zwangsführung gewährleisten, dass bereits durch das Aufsetzen der Kugelkopfhalterung auf den Kugelkopf der Anhängevorrichtung die beiden Klemmbacken in eine den Kugelkopf so fest umschließende Schließstellung überführt werden, dass in dieser Vormontagestellung bereits eine ausreichende Sicherung des Trägerrahmens relativ zum Kraftfahrzeug erzielt ist. Zudem ist durch die erfindungsgemäße Lösung ermöglicht, dass der Trägerrahmen beim Aufsetzen der Kugelkopfhalterung auf den Kugelkopf automatisch bereits in eine horizontale Stellung ausgerichtet wird, ohne dass insoweit nach dem Aufsetzen noch eine Justierung durch eine Bedienperson erfolgt. Unterstützt wird dies dadurch, dass die Klemmbacken jeweils eine Stützkontur aufweisen, die sich an einem Kugelhals des Kugelkopfes der Anhängevorrichtung radial abstützt. Hierdurch ergibt sich eine besonders bedienerfreundliche Montage des Heckträgersystems auf dem Kugelkopf der Anhängevorrichtung. Denn eine Bedienperson muss das Heckträgersystem lediglich an den Kugelkopf heranführen und die Kugelkopfhalterung von oben auf den Kugelkopf aufgleiten lassen. Die korrekte Ausrichtung der Kugelkopfhalterung erfolgt durch das Eigengewicht des Heckträgersystems automatisch dadurch, dass die Klemmbacken in der rahmenfesten Führungsstruktur in Hochrichtung hineingleiten und dabei über die mechanische Zwangsführung in die Schließstellung bewegt werden.

Die erfindungsgemäße Lösung eignet sich für freitragende Heckträgersysteme, die heckseitig an einem Kraftfahrzeug angeordnet und lediglich durch Befestigung auf dem Kugelkopf der Anhängevorrichtung fahrzeugfest montiert werden.

In Ausgestaltung der Erfindung sind die Führungsstruktur und die mechanische Zwangsführung in einem becherartigen Stützgehäuse vorgesehen, das an dem Trägerrahmen befestigt ist. Das becherartige Stützgehäuse ist - bei horizontaler Ausrichtung des Heckträgersystems - zu einer Unterseite hin offen, um von oben auf den Kugelkopf der Anhängevorrichtung aufgestülpt werden zu können.

In weiterer Ausgestaltung der Erfindung weist die mechanische Zwangsführung wenigstens eine Führungsschräge auf, die auf den wenigstens einen Klemmbacken bei einer Verlagerung des Klemmbackens in Hochrichtung einwirkt. Die wenigstens eine Führungsschräge kann durch wenigstens eine Führungsnut innenseitig des Stützgehäuses gebildet sein. Alternativ kann die wenigstens eine Führungsschräge an einem unteren Randbereich des Stützgehäuses vorgesehen sein, um den wenigstens einen schwenkbeweglichen Klemmbacken beim Eintauchen des Klemmbackens von unten in das Stützgehäuse radial von außen her nach innen zu zwingen und so die Schwenkbewegung des Klemmbackens aus der Öffnungsstellung in die Schließstellung zu bewirken, während der Klemmbacken in dem Stützgehäuse in Hochrichtung nach oben bewegt wird.

In weiterer Ausgestaltung der Erfindung ist der wenigstens eine Klemmbacken in einem oberen Bereich um eine quer zur Hochrichtung verlaufende Schwenkachse schwenkbeweglich gelagert, und die mechanische Zwangsführung greift an dem wenigstens einen schwenkbeweglichen Klemmbacken in Abstand unterhalb der Schwenkachse an. Erfindungsgemäß sind alle Klemmbacken in Hochrichtung über die Führungsstruktur verlagerbar. Es ist erfindungsgemäß ausreichend, wenn lediglich einer dieser Klemmbacken zusätzlich schwenkbeweglich gelagert ist. Vorteilhaft sind insgesamt zwei Klemmbacken vorgesehen, die beide sowohl in Hochrichtung als auch in Schwenkrichtung beweglich sind.

In weiterer Ausgestaltung der Erfindung sind zwei Klemmbacken vorgesehen, die um wenigstens eine Schwenkachse gegensinnig zueinander schwenkbeweglich gelagert sind. Jeder Klemmbacken kann um eine eigene Schwenkachse schwenkbeweglich sein, wobei die Schwenkachsen parallel zueinander sind. Alternativ können die Klemmbacken um eine einzelne, gemeinsame Schwenkachse angeordnet sein. Dabei ist die gemeinsame Schwenkachse jeweils im oberen Bereich der beiden Klemmbacken positioniert, so dass die beiden Klemmbacken im Bereich der gemeinsamen Schwenkachse ineinandergreifen und quasi hängend an der Schwenkachse gehalten sind. Die Klemmbacken werden bei beiden Varianten klauen- oder maulartig zusammengeführt oder auseinanderbewegt.

In weiterer Ausgestaltung der Erfindung weist wenigstens ein Klemmbacken an einem unteren Endbereich eine Stützkontur auf, die sich in Schließstellung des Klemmbackens an einem Hals des Kugelkopfes der Anhängevorrichtung abstützt. Die Stützkontur gewährleistet in der Schließstellung der Klemmbacken eine horizontale Ausrichtung des Heckträgersystems relativ zum Kraftfahrzeug, da davon auszugehen ist, dass der Kugelkopfhals in Hochrichtung des Kraftfahrzeugs ausgerichtet ist und die Stützkontur in einer Radialebene des Kugelkopfhalses abgestützt ist.

In weiterer Ausgestaltung der Erfindung ist für jeden Klemmbacken jeweils wenigstens eine Führungsschräge vorgesehen, wobei die Führungsschrägen für die gegensinnig beweglichen Klemmbacken relativ zu einer Hochachse spiegelsymmetrisch zueinander ausgerichtet sind. Bei dieser Ausgestaltung sind die Führungsschrägen vorzugsweise als Führungsnuten innerhalb des becherartigen Stützgehäuses vorgesehen, wobei jeder Klemmbacken mittels eines Gleitzapfens in die jeweilige Führungsnut hineinragt.

In weiterer Ausgestaltung der Erfindung weist die Führungsstruktur für die wenigstens zwei Klemmbacken in Hochrichtung verlaufende Führungsspuren auf, die die wenigstens eine Schwenkachse der Klemmbacken für eine Verlagerung in Hochrichtung relativ zu der Führungsstruktur führen. Vorzugsweise sind die Führungsspuren als nutförmige Führungskulissen gestaltet und die Gleitlagerung wird durch Gleitbolzen gebildet, die in diese Führungskulissen hineinragen. Alternativ ist es möglich, die Führungsspuren als stegförmige Führungsprofile auszubilden, auf denen im Bereich der wenigstens einen Schwenkachse mit jeweils einer Gleitnut versehene Gleitsteine in Hochrichtung verschiebbar geführt sind, die die Gleitlagerung für die Schwenkachse der Klemmbacken bilden.

In weiterer Ausgestaltung der Erfindung ist jede Schwenkachse im Bereich einer Gleitlagerung vorgesehen, die Gleitlagerbolzen aufweist, die koaxial zur Schwenkachse zu gegenüberliegenden Stirnseiten hin abragen und in jeweils einer Führungsspur geführt sind. Vorzugsweise sind die einander gegenüberliegenden Führungsspuren als nut- oder schlitzförmige Führungskulissen gestaltet, die in Hochrichtung im Bereich gegenüberliegender Innenwandungen der Führungsstruktur vorgesehen sind.

In weiterer Ausgestaltung der Erfindung gehen die Führungsschrägen im Bereich der Schließstellung in einen Spielbereich über, der eine zusätzlich begrenzte Schwenkbeweglichkeit der Klemmbacken in Schließrichtung zulässt, und die Klemmbacken sind durch eine Federeinrichtung in Schließrichtung drehmomentbeaufschlagt. Der Spielbereich dient dazu, bei Erreichen der Schließstellung der Klemmbacken eine begrenzte Schwenkbeweglichkeit der Klemmbacken trotz der Zwangsführung zuzulassen, um über die Federeinrichtung eine Spannkraft auf die Klemmbacken in Klemmrichtung, das heißt in Schließrichtung der Klemmbacken, erzielen zu können.

In weiterer Ausgestaltung der Erfindung weist die Spannvorrichtung einen mit einem Klemmbacken in der Schließstellung formschlüssig zusammenwirkenden Sperrbolzen auf, der quer zu der Hochrichtung der Führungsstruktur auf den Klemmbacken wirkt. Der Sperrbolzen ist demzufolge quer zu der Hochrichtung der Führungsstruktur beweglich angeordnet, um auf den Klemmbacken in Schließrichtung, das heißt in Klemmrichtung, von außen her ein zusätzliches Drehmoment auszuüben.

In weiterer Ausgestaltung der Erfindung ist der Sperrbolzen mittels einer Kniehebelanordnung zwischen einer Sperrstellung und einer Freigabestellung verlagerbar. Die Kniehebelanordnung gewährleistet, dass der Sperrbolzen in seiner Sperrstellung gesichert ist, da die Kniehebelanordnung in dieser Sperrstellung sich in ihrer Übertotpunktlage befindet.

In weiterer Ausgestaltung der Erfindung weist die Federeinrichtung wenigstens eine Schenkelfeder auf, die koaxial zu der Schwenkachse angeordnet ist und mit ihren gegenüberliegenden Schenkelenden an den beiden Klemmbacken abgestützt ist. Die Schenkelenden der Schenkelfeder wirken demzufolge simultan auf die beiden Klemmbacken, wobei die wenigstens eine Schenkelfeder derart gestaltet ist, dass sie die beiden Klemmbacken in Schließrichtung der Klemmbacken drehmomentbeaufschlagt.

In weiterer Ausgestaltung der Erfindung weisen die Klemmbacken eine dem Kugelkopf zugewandte Anlagekontur auf, die jeweils kugelabschnittsförmig gekrümmt ist. Dadurch wird eine Anpressung der Klemmbacken über eine relativ große, kugelabschnittsförmig gewölbte Anlagefläche erzielt, was einen hohen Anpressdruck und demzufolge eine besonders sichere Positionierung des Heckträgersystems auf dem Kugelkopf der Anhängevorrichtung ermöglicht.

In weiterer Ausgestaltung der Erfindung sind zwei Klemmbacken vorgesehen, die um zwei zueinander parallele Schwenkachsen schwenkbeweglich gelagert sind. Die Klemmbacken sind demzufolge nicht direkt miteinander über eine gemeinsame Schwenkachse gekoppelt, sondern vielmehr indirekt über die mechanische Zwangsführung bezüglich ihrer Schwenkbewegung und Höhenverlagerung miteinander synchronisiert.

In weiterer Ausgestaltung der Erfindung sind koaxial zu der jeweiligen Schwenkachse an jedem Klemmbacken zwei zu gegenüberliegenden Seiten hin abragende Gleitlagerbolzen vorgesehen, die in zueinander parallelen Führungsspuren an gegenüberliegenden Seiten der Führungsstruktur in Hochrichtung verlagerbar sind. Jeder Klemmbacken weist demzufolge ein Paar von Gleitlagerbolzen auf, denen auf gegenüberliegenden Seiten jeweils eine Führungsspur an der entsprechenden Führungsstruktur zugeordnet ist. Die jeweilige Führungsspur kann analog der zuvor beschriebenen Ausführungsform als nut- oder schlitzförmige Führungskulisse oder als Führungssteg gestaltet sein.

In weiterer Ausgestaltung der Erfindung sind auf jeder Seite der Führungsstruktur jeweils zwei Führungsspuren mit Steigungsabschnitten versehen, deren Abstand zueinander sich - in Hochrichtung gesehen - von einem unteren Endbereich ausgehend zumindest über einen Teil einer Gesamtlänge der Führungsspuren stetig vergrößert. Die Führungsspuren auf jeder der beiden gegenüberliegenden Seiten der Führungsstruktur verlaufen daher - auf eine vertikale Querebene des Heckträgersystems bezogen - spiegelsymmetrisch schräg nach oben voneinander weg.

In weiterer Ausgestaltung der Erfindung weisen die beiden Führungsspuren auf jeder Seite der Führungsstruktur zwei in Hochrichtung erstreckte Parallelabschnitte auf, die an die Steigungsabschnitte der Führungsspuren nach oben anschließen. Die Steigungsabschnitte und die Parallelabschnitte gehen offen ineinander über.

In weiterer Ausgestaltung der Erfindung weist jeder Klemmbacken oberhalb der Schwenkachse einen Kopfbereich auf, der mit wenigstens einer auf den benachbarten Klemmbacken zuweisenden Zentrierprofilierung versehen ist. Die Zentrierprofilierungen der gegenüberliegenden Kopfbereiche der benachbarten Klemmbacken sind aufeinander abgestimmt, wobei insbesondere ein Klemmbacken eine Zentrierprofilierung in Form einer Zentriernase und der andere Klemmbacken eine Zentrierprofilierung in Form einer Zentriergabel aufweist, die die Zentriernase flankiert.

In weiterer Ausgestaltung der Erfindung weist die Zwangsführung wenigstens eine federelastisch wirksame Kopfstützeinrichtung auf, die die Kopfbereiche der Klemmbacken gegeneinander belastet. Die Kopfstützeinrichtung übt auf die Kopfbereiche der Klemmbacken eine Zug- oder Druckbelastung derart aus, dass die Kopfbereiche gegeneinander gezogen oder gedrückt werden.

In weiterer Ausgestaltung der Erfindung ist die Kopfstützeinrichtung in Abstand oberhalb der Schwenkachse wirksam. Die Kopfstützeinrichtung ist Teil der mechanischen Zwangsführung, die die Klemmbacken zwischen der Öffnungsstellung und der Schließstellung verlagert.

In weiterer Ausgestaltung der Erfindung weist die Kopfstützeinrichtung wenigstens eine Schraubenzugfeder auf, die die Kopfbereiche der benachbarten Klemmbacken gegeneinander zieht. Die Schraubenzugfeder erstreckt sich quer zwischen den beiden Kopfbereichen der benachbarten Klemmbacken. Vorzugsweise sind zwei parallel nebeneinander wirksame Schraubenzugfedern vorgesehen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in einer Seitenansicht eine erste Ausführungsform eines erfindungsgemäßen Heckträgersystems kurz vor einer Montage auf einem Kugelkopf einer Anhängevorrichtung eines Personenkraftwagens,
- Fig. 2: die Seitenansicht nach Fig. 1 in teilweise aufgeschnittener Darstellung,
- Fig. 3 bis 6: in teilweise aufgeschnittener Seitenansicht verschiedene Montageschritte des Heckträgersystems gemäß Fig. 2,
- Fig. 7: in teilweise aufgeschnittener, schematischer, perspektivischer Darstellung das Heckträgersystem nach den Fig. 1 bis 6 in einem Zwischenstadium der Montage auf dem Kugelkopf der Anhängevorrichtung,
- Fig. 8: in einer Darstellung analog Fig. 7 eine montierte Endstellung vor einer Sicherung durch einen Sperrbolzen einer Spannvorrichtung,
- Fig. 9: die Darstellung nach Fig. 8 unter Weglassung eines Stützgehäuses der Kugelkopfhalterung des Heckträgersystems,
- Fig. 10 bis 15: in einer Seitenansicht eine weitere Ausführungsform eines erfindungsgemäßen Heckträgersystems in unterschiedlichen Stellungen relativ zu einem Kugelkopf eines Kraftfahrzeugs,
- Fig. 16: in perspektivischer Darstellung einen Teilbereich des Heckträgersystems nach den Fig. 10 bis 15 unter Weglassung von Teilen der Kugelkopfhalterung,
- Fig. 17: das Heckträgersystem nach Fig. 16 mit Einblendung einer becherartigen Führungsstruktur der Kugelkopfhalterung,
- Fig. 18: das Heckträgersystem nach Fig. 17 in einer anderen Funktionsstellung,
- Fig. 19: in vergrößerter perspektivischer Darstellung einen Teilbereich des Heckträgersystems gemäß den Fig. 10 bis 18,
- Fig. 20: die Darstellung nach Fig. 19 unter Weglassung von zwei Schraubenzugfedern einer Kopfstützeinrichtung,
- Fig. 21: das Heckträgersystem gemäß Fig. 19 in einer Schließstellung relativ zu dem Kugelkopf und
- Fig. 22: die Schließstellung gemäß Fig. 21 unter Hinzufügung der Schraubenzugfedern der Kopfstützeinrichtung.

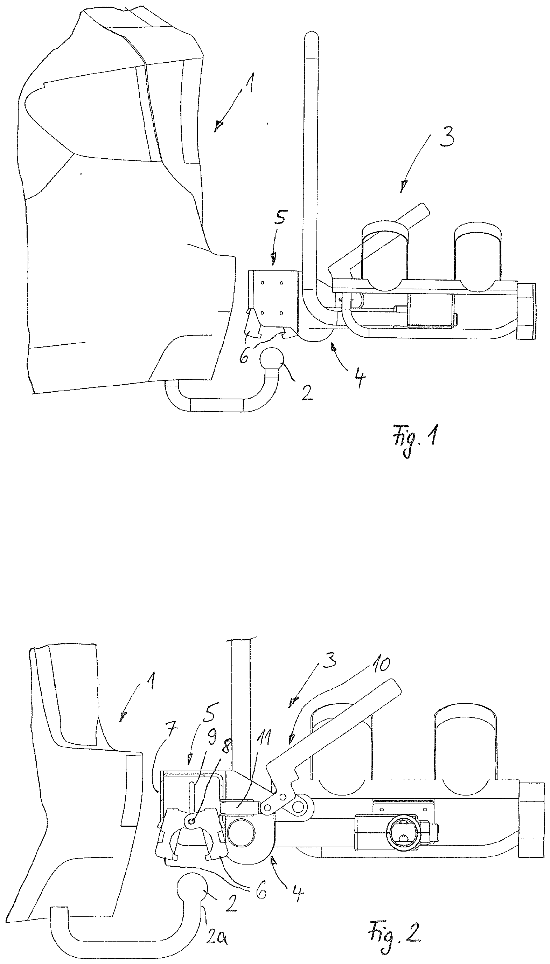

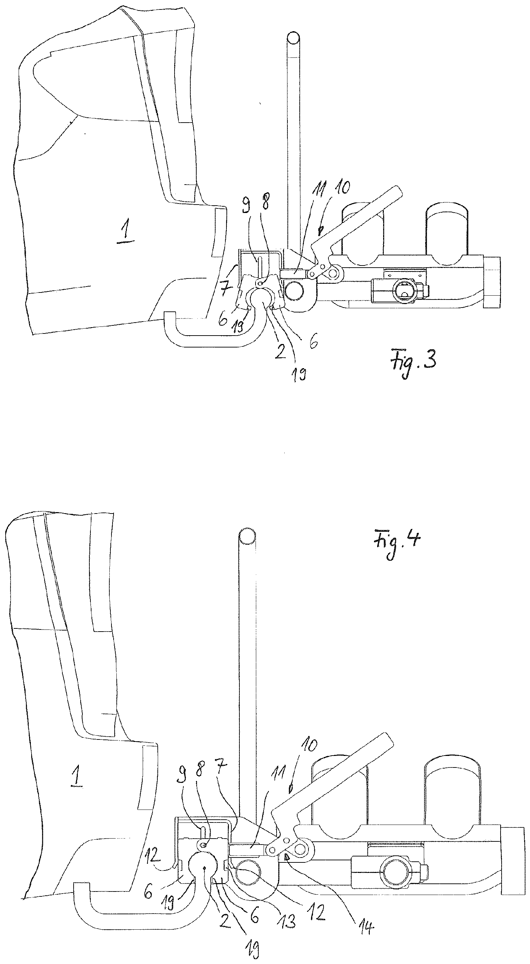

Ein Personenkraftwagen 1 weist gemäß den Fig. 1 bis 9 heckseitig eine Anhängevorrichtung auf, die einen Kugelkopf 2 umfasst. Der Kugelkopf 2 ist in grundsätzlich bekannter Weise fest mit dem Personenkraftwagen 1 verbunden. Unterhalb des Kugelkopfes 2 ist ein Kugelkopfhals 2a vorgesehen, der Teil der Anhängevorrichtung ist und in Fahrzeughochrichtung nach oben ausgerichtet ist. Ein Heckträgersystem 3 ist dazu vorgesehen, auf dem Kugelkopf der Anhängevorrichtung befestigt zu werden, um so mit dem Personenkraftwagen 1 mitgeführt werden zu können. Das Heckträgersystem 3 ist freitragend ausgeführt und wird ausschließlich durch eine Befestigung auf dem Kugelkopf 2 und dem Kugelkopfhals 2a des Personenkraftwagens 1 an diesem gesichert. Das Heckträgersystem 3 weist einen Trägerrahmen 4 auf, der eine Kugelkopfhalterung 5 umfasst, die nachfolgend näher beschrieben werden wird. Die Kugelkopfhalterung 5 ist fest und lastübertragend mit dem Trägerrahmen 4 verbunden. Der Trägerrahmen 4 trägt nicht näher bezeichnete Aufnahmeelemente für Freizeitgeräte wie Fahrräder oder ähnliches. Die Kugelkopfhalterung 5 weist ein becher- oder kastenförmiges Stützgehäuse 7 auf, das zu einer Oberseite hin offen und zu einer Unterseite hin geschlossen ist. Das Stützgehäuse 7 ist im Querschnitt viereckig ausgeführt und weist vier Seitenwandungen auf, die einander paarweise gegenüberliegend von der einen Boden bildenden Oberseite aus nach unten abragen. In dem Stützgehäuse 7 sind zwei Klemmbacken 6 beweglich gelagert. Die beiden Klemmbacken 6 sind zueinander spiegelsymmetrisch, im Übrigen aber zumindest weitgehend identisch zueinander gestaltet. Beide Klemmbacken 6 weisen im Bereich einer zum gegenüberliegenden Klemmbacken 6 abragenden Innenfläche eine kugelabschnittsförmige Anlagefläche auf, die auf eine Kugelkontur des Kugelkopfes 2 der Anhängevorrichtung abgestimmt sind. In montiertem Zustand umgreifen die beiden Klemmbacken 6 den Kugelkopf 2 der Anhängevorrichtung von gegenüberliegenden Seiten her jeweils formschlüssig (siehe Fig. 4 bis 6 und 8, 9). Unterhalb der kugelabschnittsförmigen Anlagefläche weisen beide Klemmbacken 6 jeweils eine Stützkontur 19 auf, die sich in einer Schließstellung der Klemmbacken 6 bei montiertem Heckträgersystem unterhalb des Kugelkopfes 2 an dem Kugelkopfhals 2a auf gegenüberliegenden Seiten abstützen.

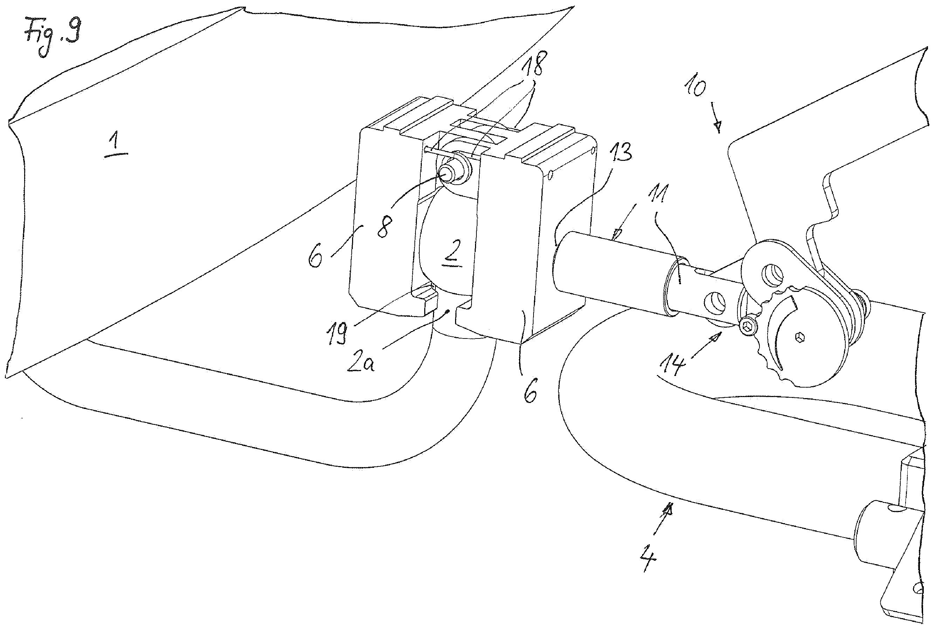

Die beiden Klemmbacken 6 sind um eine gemeinsame Schwenkachse 8 gegensinnig zueinander schwenkbeweglich gelagert. Hierzu weisen die beiden Klemmbacken 6 in ihrem oberen Bereich jeweils Schwenkscharnieranordnungen auf, die gemäß Fig. 9 alternierend ineinandergreifen und von einem Lagerbolzen durchsetzt sind, der die Scharnierachse für die Schwenkscharnieranordnungen und demzufolge die Schwenkachse 8 bildet. Das so gebildete Schwenkscharnier zwischen den Klemmbacken 6 ist oberhalb der kugelabschnittsförmigen Anlageflächen der Klemmbacken 6 positioniert. Die beiden Klemmbacken 6 sind demzufolge in einer Öffnungsstellung (Fig. 1 und 2) nach außen gespreizt angeordnet und verschwenken in Richtung der Schließstellung aufeinander zu nach innen. Beide Klemmbacken 6 sind durch eine Federeinrichtung gegensinnig zueinander permanent federkraftbeaufschlagt und demzufolge drehmomentbeaufschlagt in Richtung ihrer Schließstellung. Hierzu sind gemäß Fig. 9 zwei Schenkelfedern 18 vorgesehen, die auf gegenüberliegenden Seiten der Schwenkscharnieranordnungen koaxial zur Schwenkachse 8 auf dem entsprechenden Lagerbolzen angeordnet sind und mit deren gegenüberliegenden Schenkelenden jeweils in eine entsprechende Bohrung des jeweiligen Klemmbackens 6 axial eintauchen. Jede der beiden Schenkelfedern, von denen die in Fig. 9 Rückseitige lediglich angedeutet ist, wird durch einen Federstahldraht gebildet, der über mehrere Windungen schraubenförmig gebogen ist und in die beiden Schenkelenden ausläuft, die geradlinig ausgeführt sind.

Wie anhand der Fig. 2 bis 9 erkennbar ist, ist die Schwenkachse 8 der Klemmbacken 6 in betriebsfertig montiertem und am Personenkraftwagen 1 befestigten Zustand in Fahrzeugquerrichtung und damit horizontal ausgerichtet. In diesem Befestigungszustand ist ein Klemmbacken 6 in Fahrzeuglängsrichtung vor dem Kugelkopf 2 und der andere Klemmbacken 6 in Fahrzeuglängsrichtung hinter dem Kugelkopf 2 positioniert.

Jeder Klemmbacken 6 ist im Bereich seiner nach außen gewandten Kontur blockförmig nach Art eines Quaders gestaltet, wobei die Klemmbacken 6 in ihrer gemeinsamen Außenkontur an eine Innenkontur des Stützgehäuses 7 angepasst sind.

Die beiden Klemmbacken 6 sind innerhalb des Stützgehäuses 7 gehalten und in Hochrichtung verschiebbar gelagert. Hierzu weist das Stützgehäuse 7 an zwei gegenüberliegenden Seitenwandungen zwei in Hochrichtung erstreckte Führungskulissen 9 auf, in denen gegenüberliegende Stirnendbereiche des Lagerbolzens, der die Schwenkachse 8 bildet, gleitbewegglich verschiebbar sind.

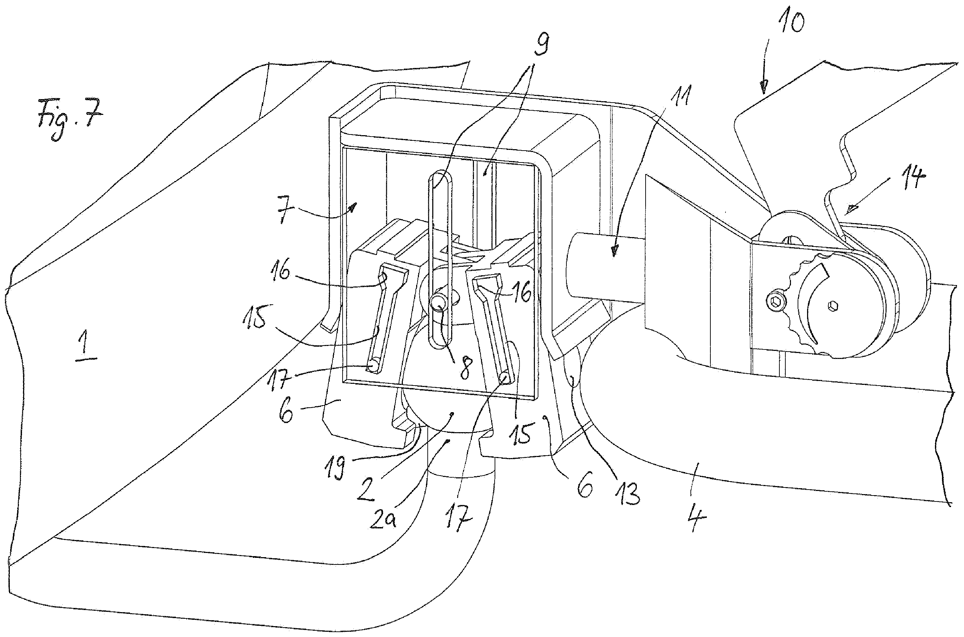

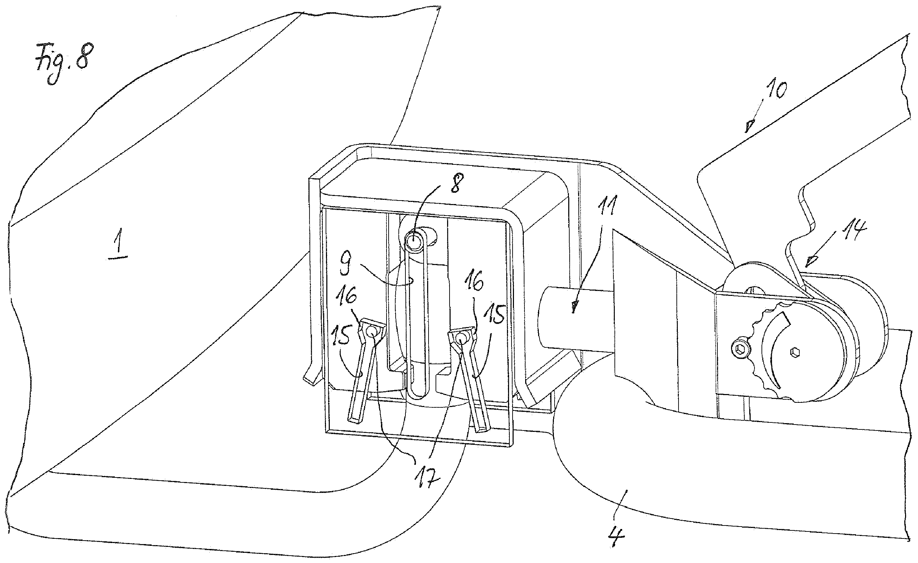

Wie anhand der Fig. 7 und 8 erkennbar ist, weist jeder Klemmbacken 6 zudem seitlich jeweils einen nach außen abragenden Steuerzapfen 17 auf, der in eine als Führungsschräge dienende Führungsnut 15 hineinragt. Die jeweilige Führungsnut 15 ist innenseitig der entsprechenden Seitenwandung des Stützgehäuses 7 vorgesehen und gehäusefest innerhalb des Stützgehäuses 7 positioniert. Auch die Führungskulissen 9 sind gehäusefest im Stützgehäuse 7 vorgesehen. Die beiden Führungsnuten 15 verlaufen ausgehend von einer Unterkante der entsprechenden Seitenwandung des Stützgehäuses 7 schräg nach oben zur Mitte der Seitenwandung hin. Die beiden Führungsnuten 15 sind spiegelsymmetrisch zu einer vertikalen Mittelquerebene ausgerichtet, längs der die gegenüberliegenden Führungskulissen 9 miteinander fluchten. In einem oberen Endbereich der Führungsnuten 15 sind diese erweitert und bilden einen Spielbereich 16. In diesen Spielbereichen 16 sind die Steuerzapfen 17 positioniert, wenn die Klemmbacken 6 gemäß Fig. 8 in ihre Schließstellung innerhalb des Stützgehäuses 7 nach oben verlagert sind, in der die Stirnendbereiche des die Schwenkachse 8 bildenden Lagerbolzens an einem oberen Rand der jeweiligen Führungskulisse 9 zur Anlage kommen. Der Spielbereich 16 dient dazu, die durch die Führungsnuten 15 bewirkte Zwangsführung der Steuerzapfen 17 aufzuheben und so eine durch die Schenkelfedern 18 erzwungene Schwenkbewegung der Klemmbacken 6 bis zur vollständigen Anlage der Klemmbacken 6 an dem Kugelkopf 2 zu ermöglichen.

Statt der durch die Führungsnuten 15 gebildeten Führungsschrägen sieht eine alternative Ausführungsform der Erfindung vor, dass eine mechanische Zwangsführung der Klemmbacken 6 überlagert zu einer Verschiebung in Hochrichtung durch schräg nach außen verlaufende Unterkanten gegenüberliegender Seitenwandungen des Stützgehäuses gebildet sind, wie dies anhand der Fig. 1 bis 9 erkennbar ist. Denn die die relativ zu den kugelabschnittsförmigen Anlageflächen und den Stützkonturen 19 der Klemmbacken 6 gesehenen Rückseiten der Klemmbacken 6 liegen an gegenüberliegenden, in Fahrzeuglängsrichtung zueinander beabstandeten Seitenwandungen des Stützgehäuses 7 an, deren Unterkante jeweils nach außen gekrümmt sind. Diese nach außen gekrümmten Unterkanten können in gleicher Weise Führungsschrägen einer mechanischen Zwangsführung der Erfindung bilden, wie dies die Führungsnuten 15 gemäß den Fig. 7 und 8 sind. Die Führungsschrägen stützen die Klemmbacken allerdings lediglich außenseitig bei einer Hochverlagerung der Klemmbacken 6, wohingegen die Führungsnuten 15 gemäß Fig. 7 bis 9 die Steuerzapfen 17 in beiden Schwenkrichtungen des jeweiligen Klemmbackens 6 zwangsführen, wodurch ein verbessertes zwangsgeführtes Einsteuern der Klemmbacken 6 in das Stützgehäuse 7 bei einer Verlagerung der Klemmbacken 6 in Hochrichtung des Stützgehäuses 7 erzielt wird.

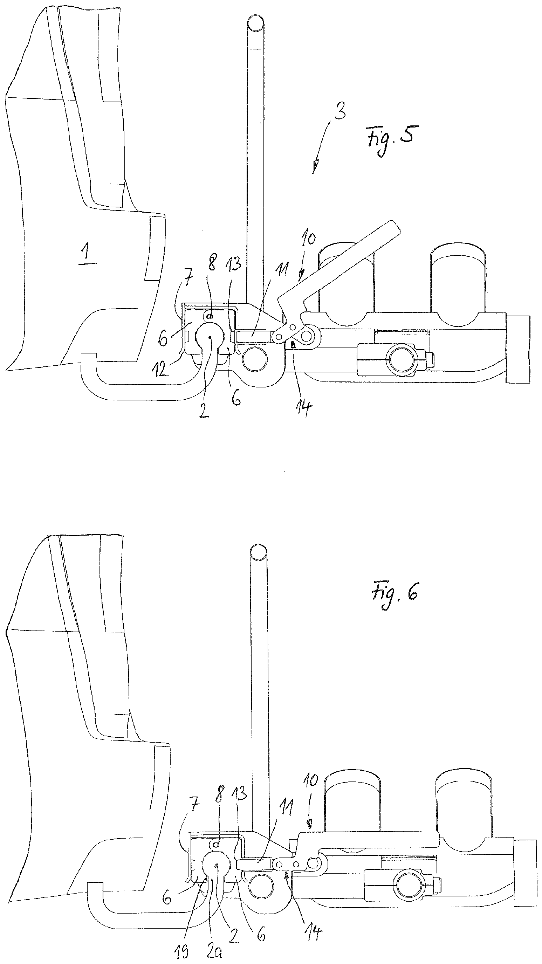

Die Verlagerung der Klemmbacken 6 in Hochrichtung des Stützgehäuses 7 nach oben und damit die Verlagerung der Stirnendbereiche des Lagerbolzens, der die Schwenkachse 8 bildet, in den Führungskulissen 9 nach oben erfolgt in einfacher Weise bei einem Aufsetzen des Heckträgersystems 3 auf den Kugelkopf der Anhängevorrichtung durch das Eigengewicht der Kugelkopfhalterung 5 und des Trägerrahmens 4. Denn sobald die Klemmbacken 6 in ihrer Öffnungsstellung gemäß Fig. 3 auf eine Oberseite des Kugelkopfes 2 auftreffen, drückt das Eigengewicht des Heckträgersystems 3 das Stützgehäuse 7 zwangsläufig nach unten, wohingegen die Schwenkscharnieranordnungen der Schwenkachse 8 beider Klemmbacken 6 sich auf der Oberseite des Kugelkopfes 2 abstützen. Dadurch gleitet der die Schwenkachse 8 bildende Lagerbolzen zwangsläufig in den gegenüberliegenden Führungskulissen 9 vertikal nach oben bzw. das Stützgehäuse 7 vertikal nach unten. Gleichzeitig werden über die Führungsnuten 15 die Klemmbacken 6 in Richtung ihrer Schließstellung nach innen eingesteuert. Sobald die Klemmbacken 6 mit ihrer Oberseite an einer Innenfläche des Bodens des Stützgehäuses 7 auftreffen, befinden sich die Klemmbacken 6 in ihrer den Kugelkopf 2 klemmenden Schließstellung. Die entsprechende Klemmung ist bereits ausreichend groß, um eine Positionssicherung des Heckträgersystems auf dem Kugelkopf 2 zu bewirken. Ergänzend stützen sich die Stützkonturen 19 der Klemmbacken radial außen an dem Kugelkopfhals 2a ab und ermöglichen so eine stabile, horizontal ausgerichtete Abstützung des Trägerrahmens 4 relativ zur Anhängevorrichtung. Zur ergänzenden Sicherung auch für den Fahrbetrieb des Personenkraftwagens 1 wird nun eine Spannvorrichtung 10 betätigt, die einen Sperrbolzen 11 umfasst. Der Sperrbolzen 11 ist in einem in Fahrzeuglängsrichtung nach hinten ragenden Rohrfortsatz des Stützgehäuses 7 linearbeweglich gelagert. Der Sperrbolzen 11 ist zwischen einer Freigabestellung gemäß Fig. 5 und einer Sperrstellung gemäß Fig. 6 verlagerbar. In seiner Sperrstellung ragt der Sperrbolzen 11 in eine komplementär gestaltete Aussparung 13 im Bereich einer Außenseite des benachbarten Klemmbackens 6 hinein und übt auf den Klemmbacken 6 eine Anpresskraft gegen den Kugelkopf 2 aus. Über die Schenkelfedern 18 wird hierdurch synchron auch ein gegengerichtetes Drehmoment auf den gegenüberliegenden Klemmbacken 6 übertragen, so dass die Federkraft der Schenkelfedern 18 auch den gegenüberliegenden Klemmbacken 6 noch näher an die gegenüberliegende Kugelanlagefläche des Kugelkopfes 2 bzw. des Kugelkopfhalses 2a herandrückt.

Zur Betätigung des Sperrbolzens 11 umfasst die Spannvorrichtung 10 eine manuell betätigbare Kniehebelanordnung 14. Die Kniehebelanordnung 14 ist in der Sperrstellung des Sperrbolzens 11 gemäß Fig. 6 in eine gespannte Übertotpunktlage gebracht. Hierzu umfasst die Kniehebelanordnung 14 einen nicht näher bezeichneten Betätigungsarm, der in der Sperrstellung gemäß Fig. 6 nach unten gedrückt ist und in der Freigabestellung des Sperrbolzens 11 und der Kniehebelanordnung 14 schräg nach oben ragt (Fig. 5). Das Spannen des Sperrbolzens 11 durch das Drücken des Betätigungsarmes aus der Stellung gemäß Fig. 5 nach unten in die Stellung gemäß Fig. 6 bewirkt demzufolge die Erhöhung der Klemmung der Klemmbacken 6 auf den Kugelkopf 2 sowie die sichere Anlage der Stützkonturen 19 am Kugelkopfhals 2a und demzufolge das Erreichen der für den Fahrbetrieb gesicherten Montagestellung des Heckträgersystems 3.

Eine Demontage des Heckträgersystems 3 erfolgt in einfacher Weise in entsprechend umgekehrter Funktionsfolge. Dabei wird zunächst der Betätigungsarm der Spannvorrichtung 10 manuell nach oben gezogen, wodurch die Kniehebelanordnung 14 gelöst wird und den Sperrbolzen 11 in die Freigabestellung zurückzieht. Anschließend kann eine Bedienperson in einfacher Weise das Heckträgersystem 3 anheben, wodurch zwangsläufig auch das Stützgehäuse 7 angehoben wird und die Klemmbacken 6 innerhalb des Stützgehäuses 7 wieder nach unten gesteuert werden. Dabei werden sie über die mechanische Zwangsführung mittels der Führungsnuten 15 zwangsläufig wieder in die gespreizte Öffnungsstellung überführt, so dass die Kugelkopfhalterung 5 und das Heckträgersystem 3 vom Kugelkopf 2 abgehoben werden können.

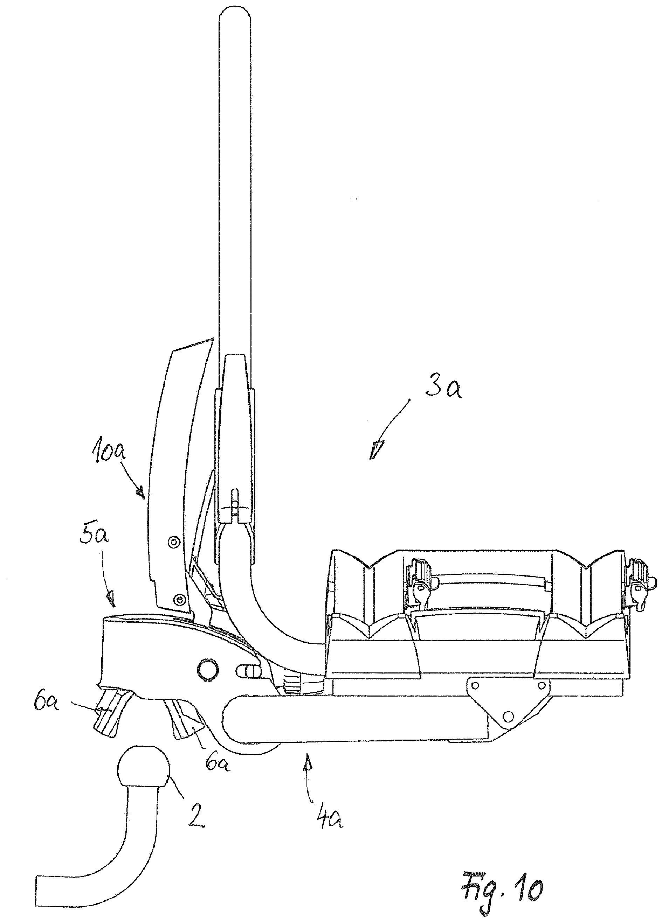

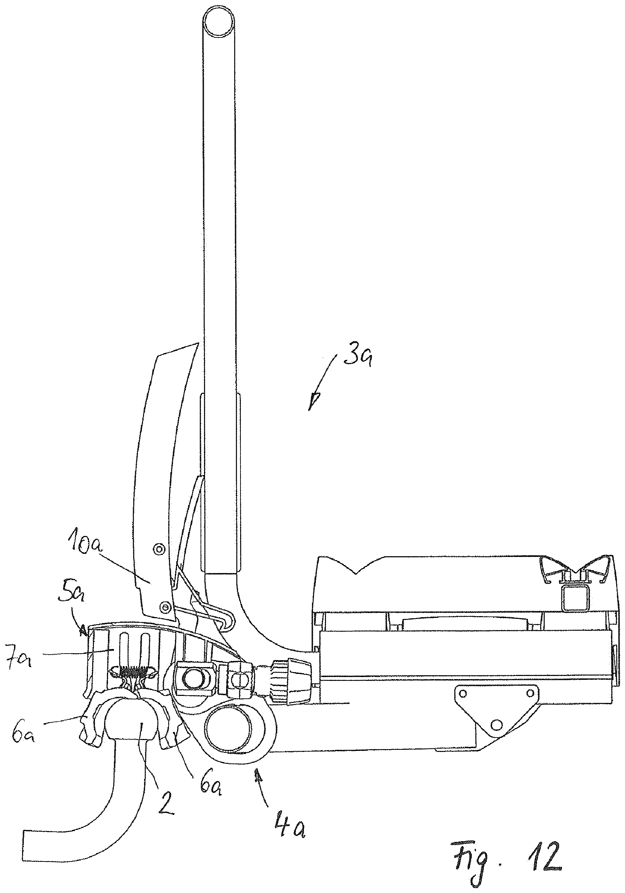

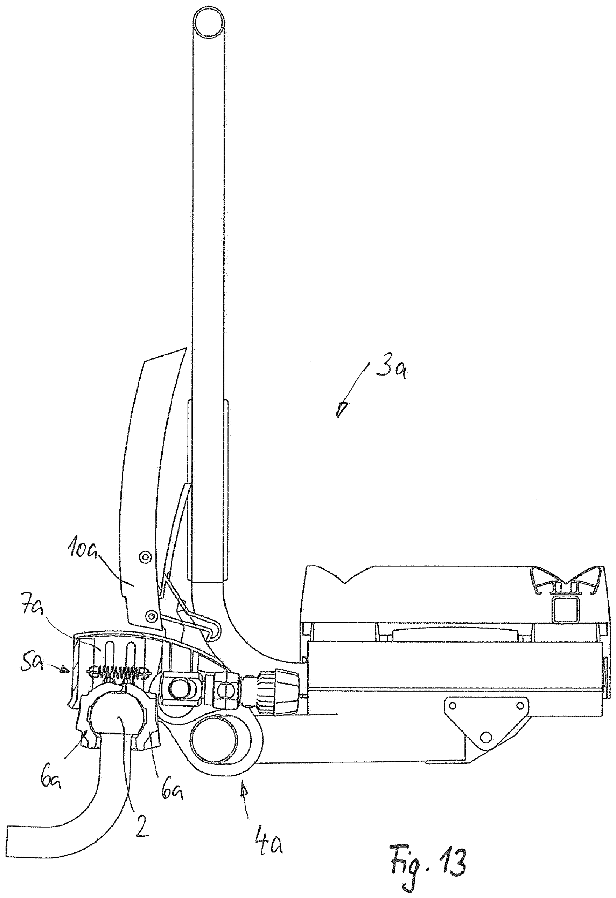

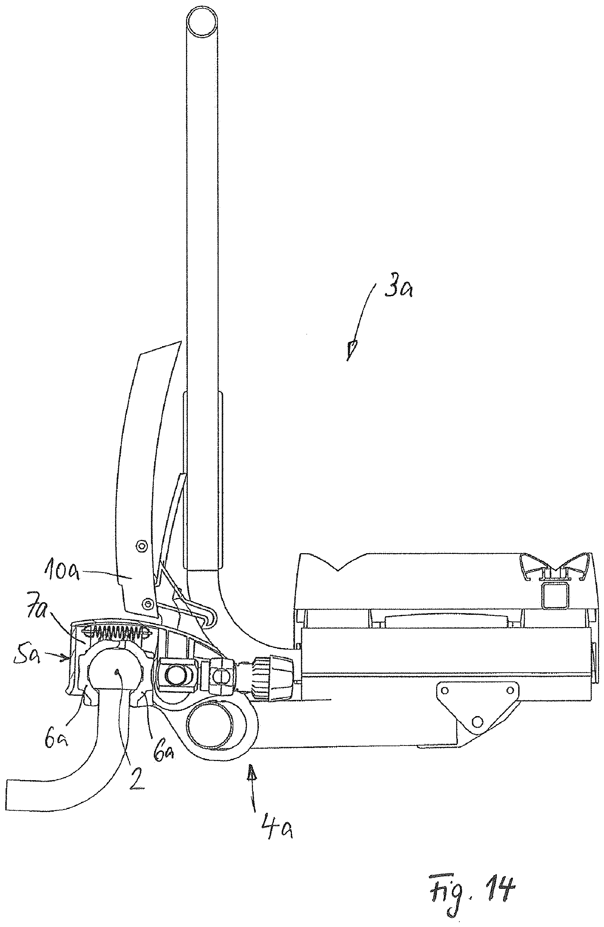

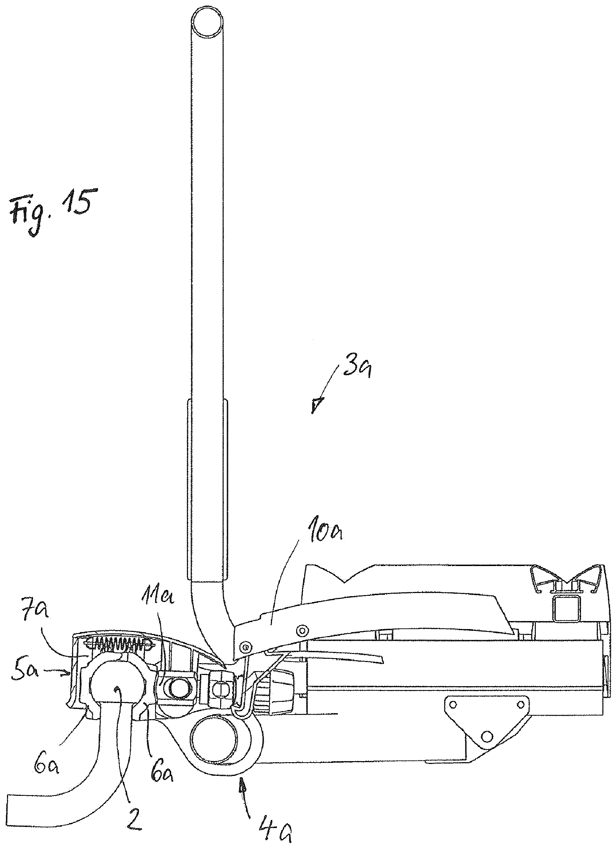

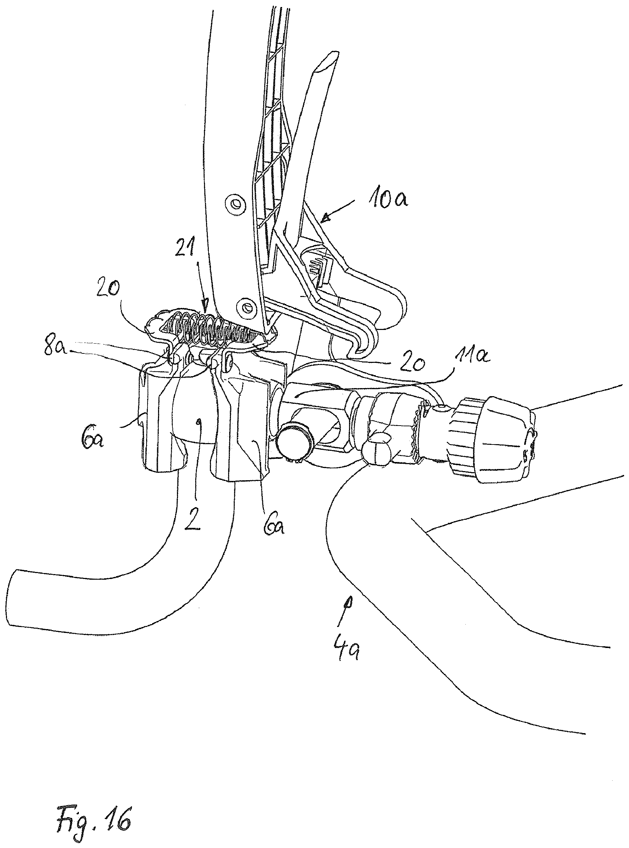

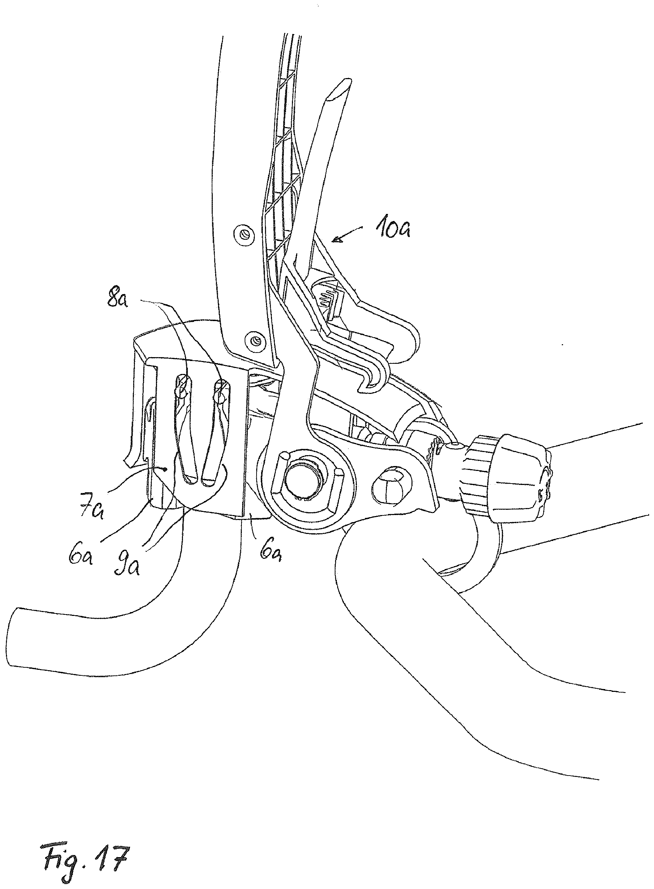

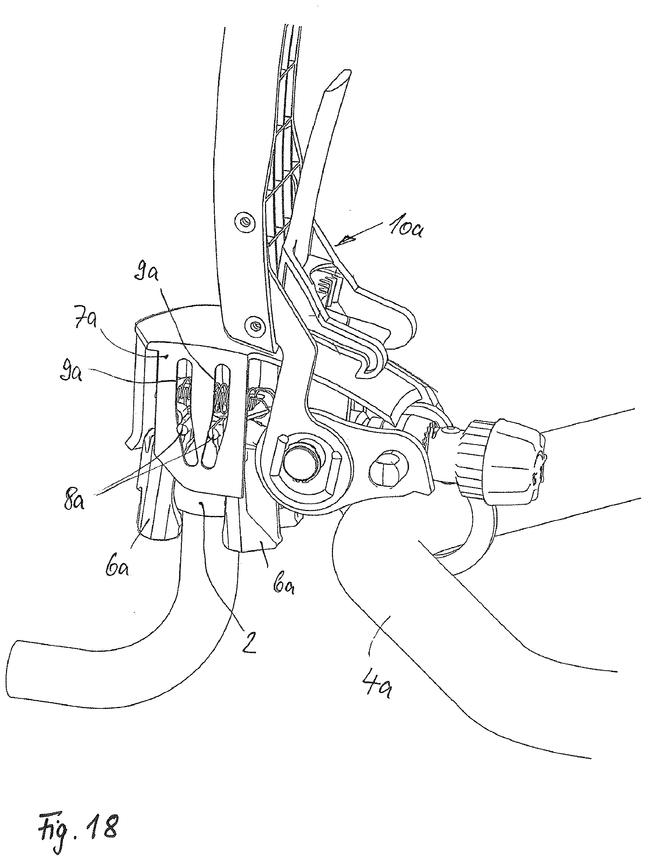

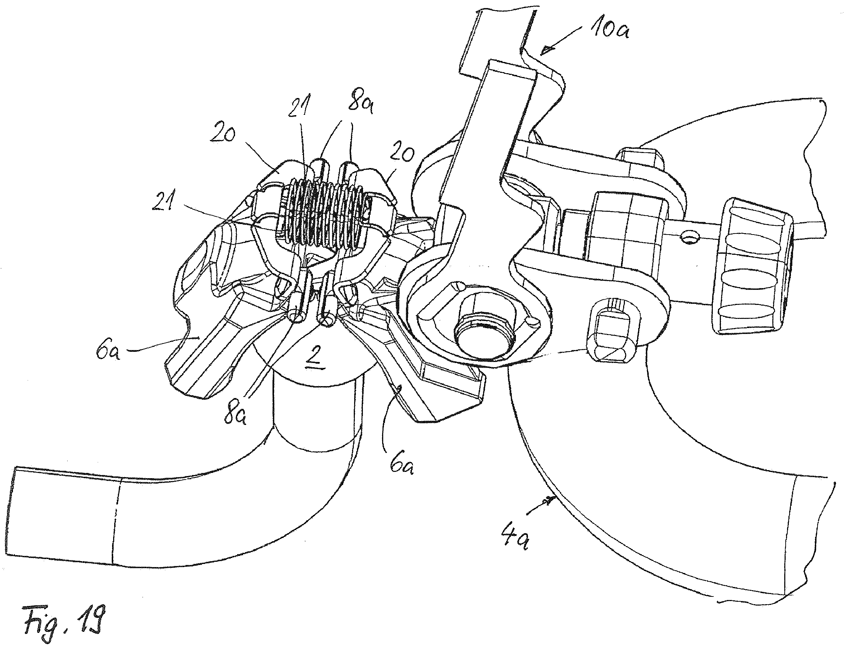

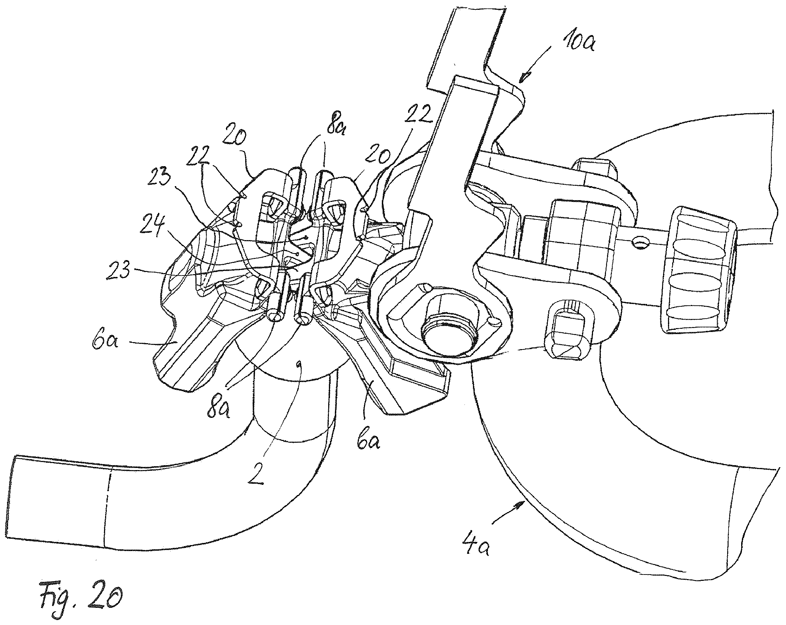

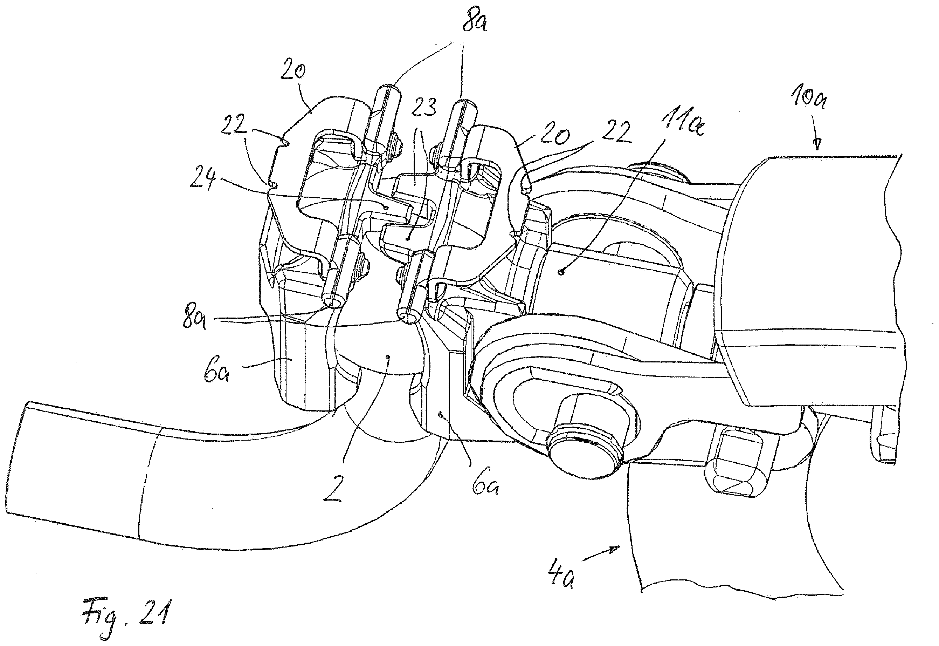

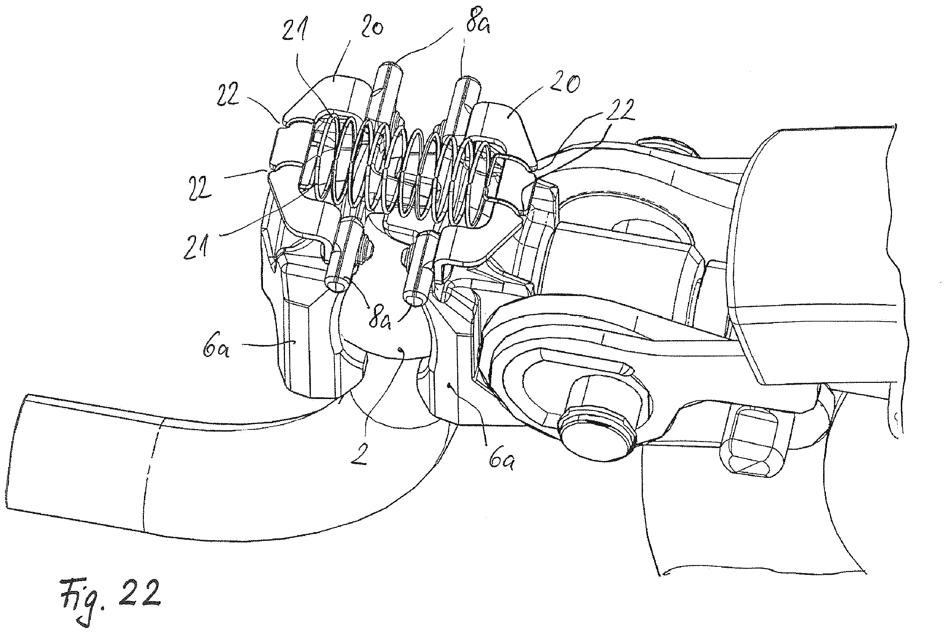

Das Heckträgersystem 3a nach den Fig. 10 bis 22 ist in gleicher Weise auf einen Kugelkopf 2 einer Anhängevorrichtung eines Personenkraftwagens montierbar, wie dies bei dem Heckträgersystem 3 gemäß den Fig. 1 bis 9 bereits beschrieben wurde. Funktionsgleiche Teile und Abschnitte des Heckträgersystems 3a sind mit gleichen Bezugszeichen versehen wie bei dem Heckträgersystem 3 gemäß den Fig. 1 bis 9, aber unter Hinzufügung des Buchstabens a. Zur Vermeidung von Wiederholungen wird ergänzend auf die Beschreibung zu dem Heckträgersystem 3 nach den Fig. 1 bis 9 verwiesen. Nachfolgend wird auf die Unterschiede des Heckträgersystems 3a eingegangen. Das Heckträgersystem 3a weist einen Trägerrahmen 4a auf, der mittels einer Kugelkopfhalterung 5a auf dem Kugelkopf 2 fixierbar ist. Die Kugelkopfhalterung 5a und der Trägerrahmen 4a sind fest und lastübertragend miteinander verbunden. Die Kugelkopfhalterung 5a weist eine relativ zu dem Trägerrahmen 4a fest angeordnete Führungsstruktur auf, die ein becherartiges Stützgehäuse 7a umfasst. Das Stützgehäuse 7a ist von einem nicht näher bezeichneten Gehäusemantel umgeben, der entsprechende Funktionselemente und Funktionsabschnitte des Stützgehäuses 7a verdeckt (siehe Fig. 10). In dem Stützgehäuse 7a sind zwei Klemmbacken 6a in Hochrichtung - auf ein Koordinatensystem des Heckträgersystems 3a bezogen - verlagerbar. Zudem sind die beiden Klemmbacken 6a um jeweils eine eigene Schwenkachse 8a an ihrem Kopfbereich schwenkbeweglich gelagert. Die beiden Schwenkachsen 8a erstrecken sich parallel zueinander und in Querrichtung des Koordinatensystems des Heckträgersystems 3a. In montiertem Zustand des Heckträgersystems 3a entspricht das Koordinatensystem des Heckträgersystems 3a einem Fahrzeugkoordinatensystem, so dass eine Hochrichtung der Fahrzeughochrichtung, eine Querrichtung der Fahrzeugquerrichtung und eine Längsrichtung der Fahrzeuglängsrichtung entspricht. Jede Schwenkachse 8a der beiden Klemmbacken 6a wird durch jeweils zwei zu gegenüberliegenden Seiten hin abragende Gleitlagerbolzen gebildet. Die beiden Gleitlagerbolzen der jeweiligen Schwenkachse 8a fluchten miteinander und ragen von gegenüberliegenden Seiten aus von dem Klemmbacken 6a zur Seite hin ab. Die die beiden Schwenkachsen 8a definierenden Gleitlagerbolzen sind auf gegenüberliegenden Seiten des Stützgehäuses 7a in jeweils einer Führungsspur 9a (Fig. 17 und 18) in Hochrichtung verlagerbar geführt. Die beiden Führungsspuren 9a auf den gegenüberliegenden Seiten des Stützgehäuses 7a sind paarweise zueinander ausgerichtet, wobei sie jeweils einen unteren Steigungsabschnitt sowie einen offen an den Steigungsabschnitt anschließenden oberen Parallelabschnitt aufweisen. Die Führungsspuren 9a werden durch Führungskulissen in Form von Schlitzen mit jeweils gleichbleibendem Querschnitt über die gesamte Länge der jeweiligen Führungsspur 9a gebildet. Anhand der Fig. 17 und 18 ist erkennbar, dass die Steigungsabschnitte der paarweisen Führungsspuren 9a auf jeder Seite relativ zu einer vertikalen Querebene spiegelsymmetrisch von unten ausgehend schräg nach oben geneigt sind, bevor sie in die parallel verlaufenden Parallelabschnitte übergehen. Die gegenüberliegenden Paare von Führungsspuren 9a sind identisch gestaltet, so dass die gegenüberliegenden Gleitlagerbolzen der Schwenkachsen 8a synchron parallel zueinander geführt sind. Die beiden Klemmbacken 6a werden an ihren Kopfbereichen 20 über eine Kopfstützeinrichtung in Form von zwei Schraubenzugfedern 21 gegeneinander gezogen. Eine Querführung und Zentrierung erfolgt über Zentrierprofilierungen, die an dem einen Klemmbacken 6a durch eine mittige Zentriernase 24 und an dem anderen Klemmbacken 6a durch eine zweischenklige Zentriergabel 23 gebildet sind. Die Zentriernase 24 und die Zentriergabel 23 ragen aufeinander zu, wobei die Abstände zwischen den Schenkeln der Zentriergabel 23 derart auf die Breite der Zentriernase 24 abgestimmt sind, dass die Zentriernase 24 zwischen die Schenkel der Zentriergabel 23 eintauchen kann. Die Kopfbereiche 20 sind an ihren gegenüberliegenden Randbereichen mit Einhängenuten 22 versehen, in die entsprechende Federenden der beiden Schraubenzugfedern 21 eingehängt werden. Die beiden Schraubenzugfedern 21 sind vorgespannt eingehängt, so dass die Schraubenzugfedern 21 in dem Kopfbereich 22 und damit in gewissem Abstand oberhalb der Schwenkachsen 8a ein permanentes federelastisches Drehmoment auf die Klemmbacken 6 gegensinnig zueinander nach außen, d. h. in Richtung der Öffnungsstellung, ausüben.

Das Stützgehäuse 7a ist ergänzend mit Führungsschrägen versehen, die mit korrespondierenden, außenliegenden Steuerkonturen der Klemmbacken 6a in gleicher Weise zusammenwirken, wie dies bei der Ausführungsform gemäß den Fig. 1 bis 9 ausführlich beschrieben wurde. Die entsprechenden Führungsschrägen und Steuerkonturen sind anhand der Zeichnungen zu der Ausführungsform gemäß den Fig. 10 bis 22 gut erkennbar. Zur Vermeidung von Wiederholungen wird daher zum einen auf die Beschreibung zur Ausführungsform nach den Fig. 1 bis 9 und zum anderen auf die Zeichnungen gemäß den Fig. 10 bis 22 verwiesen.

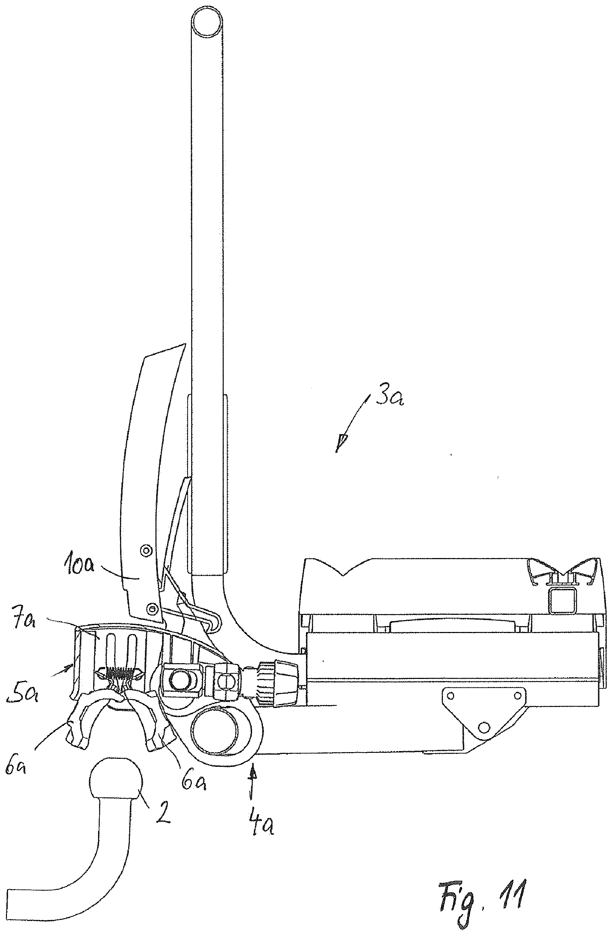

Eine Spannvorrichtung 10a bei dem Heckträgersystem 3a nach den Fig. 10 bis 22 dient dazu, die Klemmbacken 6a in ihrer Schließstellung auf dem Kugelkopf 2 zu sichern. Dafür wirkt ein Spannhebel der Spannvorrichtung 10a in analoger Weise zu der Spannvorrichtung 10 gemäß den Fig. 1 bis 9 auf einen Sperrbolzen 11a zur Sicherung des einen Klemmbackens 6a. Anhand der Fig. 11 bis 22 ist die Ausgestaltung und Funktion der Spannvorrichtung 10a erkennbar. Der Sperrbolzen 11a wirkt auf den relativ zu einer Fahrzeuglängsrichtung rückseitig am Kugelkopf 2 positionierten Klemmbacken 6a. Eine vordere Stirnfläche des Sperrbolzens wird in der Sicherungsstellung in eine rückseitige, kalottenförmige Aufnahme des Klemmbackens 6a hineingedrückt.

In einer Öffnungsstellung der Klemmbacken 6a gemäß Fig. 10 und 11 sowie 19, 20 sind die Klemmbacken 6a mit ihren Schwenkachsen 8a in den unteren Randbereich der Steigungsabschnitte der Führungsspuren 9a verlagert. Die Schraubenzugfedern 21 der Kopfstützeinrichtung ziehen die Kopfbereiche 20 der Klemmbacken 6a gegeneinander, wodurch die Klemmbacken 6a, die aus dem Stützgehäuse 7a teilweise nach unten herausragen, in einer gespreizten Öffnungsstellung gehalten sind. Sobald nun das Heckträgersystem 3a von oben auf den Kugelkopf 2 der Anhängevorrichtung des Personenkraftwagens aufgesetzt wird, kommt eine Oberseite des Kugelkopfes 2 von unten her an den Zentrierprofilierungen der Kopfbereiche 20 der Klemmbacken 6a zur Anlage. Durch das Eigengewicht des Heckträgersystems 3a verfährt zwangsläufig das Stützgehäuse 7a relativ zu dem Kugelkopf 2 nach unten, wodurch die Klemmbacken 6a mit ihren Schwenkachsen 8a zwangsläufig innerhalb der Führungsspuren 9a nach oben verlagert werden. Über die Führungsschrägen im Bereich entsprechend schräg nach außen verlaufender Unterkanten der Seitenwandungen des Stützgehäuses 7a gleiten die Außenkonturen der Klemmbacken zwangsgeführt an diesen Führungsschrägen entlang nach innen in das Innere des Stützgehäuses 7a, wodurch die Klemmbacken 6a sich zwangsläufig um den Kugelkopf 2 herum schließen. Sobald die Schwenkachsen 8a der Klemmbacken 6a die oberen Endbereiche der Parallelabschnitte der Führungsspuren 9a erreicht haben, ist die Endstellung der Klemmbacken 6a erreicht. Diese nehmen ihre den Kugelkopf 2 umschließende Schließstellung ein. Mittels der Spannvorrichtung 10a wird der Spanndruck auf wenigstens einen Klemmbacken 6a erhöht, wodurch die Sicherung des Heckträgersystems 3a auf dem Kugelkopf 2 erreicht ist. Ein Lösen des Heckträgersystems 3a erfolgt in entsprechend umgekehrter Reihenfolge, indem zunächst der Spannhebel der Spannvorrichtung 10a gelöst wird und anschließend das Heckträgersystem 3a nach oben abgehoben wird. Dadurch gleiten die Schwenkachsen 8a in den Führungsspuren 9a parallel nach unten, bevor sie in den Steigungsabschnitten voneinander weg bewegt werden. Die Schraubenzugfedern 21 bewirken ein automatisches Spreizen der Klemmbacken 6a, wodurch der Kugelkopf 2 freigegeben wird.

In der Schließstellung sowie der Sicherungsstellung der Klemmbacken 6a am Kugelkopf 2 liegen die Zentrierprofilierungen der Kopfbereiche 20 der Klemmbacken 6a nicht mehr auf der Oberseite des Kugelkopfes 2 auf. Vielmehr wird der Kugelkopf 2 ausschließlich noch über die kugelkalottenförmigen Aufnahmen der Klemmbacken 6a umschlossen.

## Patentansprüche

1. Heckträgersystem für ein Kraftfahrzeug, mit einem Trägerrahmen (4, 4a), und mit einer Kugelkopfhalterung (5, 5a) zur Fixierung des Trägerrahmens (4) auf einem Kugelkopf (2) einer Anhängevorrichtung eines Kraftfahrzeugs (1), wobei die Kugelkopfhalterung (5) wenigstens zwei Klemmbacken (6, 6a) sowie eine manuell bedienbare Spannvorrichtung (10, 10a) umfasst, von denen wenigstens ein Klemmbacken (6) zwischen einer den Kugelkopf (2) freigebenden Öffnungsstellung und einer den Kugelkopf (2) kontaktierenden Schließstellung schwenkbeweglich gelagert ist, **dadurch gekennzeichnet, dass** die wenigstens zwei Klemmbacken (6) in einer am Trägerrahmen (4) festen Führungsstruktur in Hochrichtung verlagerbar angeordnet sind, und dass der Führungsstruktur eine mechanische Zwangsführung zugeordnet ist, die mit dem wenigstens einen schwenkbeweglichen Klemmbacken (6) wirkverbunden ist und eine Bewegung der Klemmbacken (6) in Hochrichtung derart mit einer Schwenkbewegung des wenigstens einen Klemmbackens (6) überlagert, dass der schwenkbewegliche Klemmbacken (6) in einer relativ zu der Führungsstruktur unteren Stellung in der Öffnungsstellung gehalten ist und bei einer Bewegung der Klemmbacken (6) in der Führungsstruktur in Hochrichtung nach oben in die Schließstellung überführt wird.

2. Heckträgersystem nach Anspruch 1, **dadurch gekennzeichnet, dass** die mechanische Zwangsführung wenigstens eine Führungsschräge (15) aufweist, die auf den wenigstens einen Klemmbacken (6) bei einer Verlagerung des Klemmbackens (6) in Hochrichtung einwirkt.

3. Heckträgersystem nach Anspruch 1 oder 2, **dadurch gekennzeichnet, dass** zwei Klemmbacken (6, 6a) vorgesehen sind, die um wenigstens eine Schwenkachse (8, 8a) gegensinnig zueinander schwenkbeweglich gelagert sind.

4. Heckträgersystem nach Anspruch 3, **dadurch gekennzeichnet, dass** ein Klemmbacken an einem unteren Endbereich eine Stützkontur (19) aufweist, die sich in der Schließstellung des Klemmbackens (6) an einem Hals (2a) des Kugelkopfes (2) der Anhängevorrichtung abstützt.

5. Heckträgersystem nach Anspruch 3, **dadurch gekennzeichnet, dass** für jeden Klemmbacken (6) jeweils wenigstens eine Führungsschräge (15) vorgesehen ist, wobei die Führungsschrägen (15) für die gegensinnig beweglichen Klemmbacken (6) relativ zu einer Hochachse spiegelsymmetrisch zueinander ausgerichtet sind.

6. Heckträgersystem nach Anspruch 1 oder 3, **dadurch gekennzeichnet, dass** die Führungsstruktur für die wenigstens zwei Klemmbacken (6, 6a) in Hochrichtung verlaufende Führungsspuren (9, 9a) aufweist, die die wenigstens eine Schwenkachse (8, 8a) der Klemmbacken (6, 6a) für eine Verlagerung in Hochrichtung relativ zu der Führungsstruktur führen.

7. Heckträgersystem nach Anspruch 6, **dadurch gekennzeichnet, dass** jede Schwenkachse (8, 8a) im Bereich einer Gleitlagerung vorgesehen ist, die Gleitlagerbolzen aufweist, die koaxial zur Schwenkachse (8, 8a) zu gegenüberliegenden Stirnseiten hin abragen und in jeweils einer Führungsspur (9, 9a) geführt sind.

8. Heckträgersystem nach einem der vorhergehenden Ansprüche, **dadurch gekennzeichnet, dass** zwei Klemmbacken (6a) vorgesehen sind, die um zwei zueinander parallele Schwenkachsen (8a) schwenkbeweglich gelagert sind.

9. Heckträgersystem nach Anspruch 8, **dadurch gekennzeichnet, dass** koaxial zu der jeweiligen Schwenkachse (8a) an jedem Klemmbacken (6a) zwei zu gegenüberliegenden Seiten hin abragende Gleitlagerbolzen vorgesehen sind, die in zueinander parallelen Führungsspuren (9a) an gegenüberliegenden Seiten der Führungsstruktur in Hochrichtung verlagerbar sind.

10. Heckträgersystem nach Anspruch 9, **dadurch gekennzeichnet, dass** auf jeder Seite der Führungsstruktur jeweils zwei Führungsspuren (9a) mit Steigungsabschnitten versehen sind, deren Abstand zueinander sich - in Hochrichtung gesehen - von einem unteren Endbereich ausgehend zumindest über einen Teil einer Gesamtlänge der Führungsspuren (9a) stetig vergrößert.

11. Heckträgersystem nach Anspruch 10, **dadurch gekennzeichnet, dass** die beiden Führungsspuren (9a) auf jeder Seite der Führungsstruktur zwei in Hochrichtung erstreckte Parallelabschnitte aufweisen, die an die Steigungsabschnitte der Führungsspuren (9a) nach oben anschließen.

12. Heckträgersystem nach einem der Ansprüche 8 bis 11, **dadurch gekennzeichnet, dass** jeder Klemmbacken (6a) oberhalb der Schwenkachse (8a) einen Kopfbereich (20) aufweist, der mit wenigstens einer auf den benachbarten Klemmbacken (6a) zuweisenden Zentrierprofilierung (23, 24) versehen ist.

13. Heckträgersystem nach Anspruch 12, **dadurch gekennzeichnet, dass** die Zwangsführung wenigstens eine federelastisch wirksame Kopfstützeinrichtung aufweist, die die Kopfbereiche (20) der Klemmbacken (6a) gegeneinander belastet.

14. Heckträgersystem nach Anspruch 13, **dadurch gekennzeichnet, dass** die Kopfstützeinrichtung in Abstand oberhalb der Schwenkachse (8a) wirksam ist.

15. Heckträgersystem nach Anspruch 13 oder 14, **dadurch gekennzeichnet, dass** die Kopfstützeinrichtung wenigstens eine Schraubenzugfeder (21) aufweist, die die Kopfbereiche (20) der benachbarten Klemmbacken gegeneinander zieht.

## Claims

1. Rear rack system for an automotive vehicle, having a rack frame (4, 4a), and having a ball-head holder (5, 5a) for fixing the rack frame (4) on a ball head (2) of a hitch coupling device of an automotive vehicle (1), wherein the ball-head holder (5) comprises at least two clamping jaws (6, 6a) and a manually operable fastening device (10, 10a), at least one clamping jaw (6) thereof being mounted to be pivotable between an opening position, releasing the ball head (2), and a closing position, contacting the ball head (2),
**characterized in that**
the at least two clamping jaws (6) are disposed in a guiding structure fixed on the rack frame (4) to be displaceable in the vertical direction, and **in that** the guiding structure is associated with a mechanical positive guidance, which is operatively connected to the at least one pivotable clamping jaw (6) and superposes a movement of the clamping jaws (6) in the vertical direction with a pivot movement of the at least one clamping jaw (6) in such a manner that the pivotable clamping jaw (6) is retained in the opening position in a lower position relative to the guiding structure and is transferred upwards into the closing position during movement of the clamping jaws (6) in the guiding structure in the vertical direction.

2. Rear rack system according to claim 1, **characterized in that** the mechanical positive guidance includes at least one guiding slant (15) which acts on the at least one clamping jaw (6) during displacement of the clamping jaw (6) in the vertical direction.

3. Rear rack system according to claim 1 or 2, **characterized in that** two clamping jaws (6, 6a) are provided, which are mounted to be pivotable in opposite senses about at least one pivot axis (8, 8a).

4. Rear rack system according to claim 3, **characterized in that** a clamping jaw has a support contour (19) on a lower end portion, which contour rests on a neck (2a) of the ball head (2) of the hitch coupling device, in the closing position of the clamping jaw (6).

5. Rear rack system according to claim 3, **characterized in that** for each clamping jaw (6) at least one respective guiding slant (15) is provided, wherein the guiding slants (15) for the in opposite senses pivotable clamping jaws (6) are oriented mirror-symmetrical to each other relative to a vertical axis.

6. Rear rack system according to claim 1 or 3, **characterized in that** the guiding structure includes, for the at least two clamping jaws (6, 6a), guide tracks (9, 9a) extending in the vertical direction, which tracks guide the at least one pivot axis (8, 8a) of the clamping jaws (6, 6a) for displacement in the vertical direction relative to the guiding structure.

7. Rear rack system according to claim 6, **characterized in that** each pivot axis (8, 8a) is provided in the vicinity of a plain bearing which has plain bearing bolts, which bolts project towards opposite end faces, coaxially to the pivot axis (8, 8a), and are respectively guided in a guide track (9, 9a).

8. Rear rack system according to any one of the preceding claims, **characterized in that** two clamping jaws (6a) are provided which are mounted to be pivotable about two mutually parallel pivot axes (8a).

9. Rear rack system according to claim 8, **characterized in that**, coaxially to the respective pivot axis (8a), on each clamping jaw (6a) two plain bearing bolts projecting towards opposite sides are provided, which bolts are displaceable in the vertical direction within mutually parallel guiding tracks (9a) on opposite sides of the guiding structure.

10. Rear rack system according to claim 9, **characterized in that**, on each side of the guiding structure, two respective guiding tracks (9a) are provided with slope portions with the mutual spacing thereof - as seen in the vertical direction - steadily increasing from a lower end portion at least over a part of a total length of the guiding tracks (9a).

11. Rear rack system according to claim 10, **characterized in that** the two guiding tracks (9a) include, on each side of the guiding structure, two parallel portions extending in the vertical direction, which portions adjoin the slope portions of the guiding tracks (9a) towards the top.

12. Rear rack system according to any one of the claims 8 to 11, **characterized in that** each clamping jaw (6a) has a head region (20) above the pivot axis (8a), which head region is provided with at least one central profiling (23, 24) facing towards the adjacent clamping jaw (6a).

13. Rear rack system according to claim 12, **characterized in that** the positive guidance includes at least one spring-elastic operative head support device to strain the head regions (20) of the clamping jaws (6a) against each other.

14. Rear rack system according to claim 13, **characterized in that** the head support device is operative at a distance above the pivot axis (8a).

15. Rear rack system according to claim 13 or 14, **characterized in that** the head support device includes at least one screw tension spring (21) to draw the head regions (20) of the adjacent clamping jaws against each other.

## Revendications

1. Système de support arrière pour un véhicule automobile, avec un cadre de support (4, 4a) et avec un support à tête sphérique (5, 5a) pour fixage du cadre de support (4) sur une tête sphérique (2) d'un dispositif d'attelage d'un véhicule automobile (1), dans lequel le support à tête sphérique (5) comporte au moins deux mâchoires de serrage (6, 6a) ainsi qu'un dispositif de fixation (10, 10a) actionné manuellement, dont au moins une mâchoire de serrage (6) est montée de manière pivotante entre une position d'ouverture, libérant la tête sphérique (2), et une position de fermeture, contactant la tête sphérique (2),
**caractérisé en ce que**
les au moins deux mâchoires de serrage (6) sont disposées de manière à être déplaçables dans la direction verticale dans une structure de guidage fixée au cadre de support (4), et **en ce que** la structure de guidage est associée à un guidage forcé mécanique raccordé en liaison fonctionnelle à l'au moins une mâchoire de serrage (6) pivotante et superpose un mouvement des mâchoires de serrage (6) dans la direction verticale à un mouvement pivotant de l'au moins une mâchoire de serrage (6) de telle manière que la mâchoire de serrage (6) pivotante soit retenue dans la position d'ouverture dans une position inférieure par rapport à la structure de guidage et soit transférée vers le haut à la position de fermeture lors d'un mouvement des mâchoires de serrage (6) dans la structure de guidage dans la direction verticale.

2. Système de support arrière selon la revendication 1, **caractérisé en ce que** le guidage forcé mécanique comprend au moins une pente de guidage (15) agissant sur l'au moins une mâchoire de serrage (6) lors d'un déplacement de la mâchoire de serrage (6) dans la direction verticale.

3. Système de support arrière selon la revendication 1 ou 2, **caractérisé en ce que** deux mâchoires de serrage (6, 6a) sont prévues, montées de manière pivotante autour d'au moins un axe pivotant (8, 8a) dans le sens opposé l'une à l'autre.

4. Système de support arrière selon la revendication 3, **caractérisé en ce qu'**une mâchoire de serrage, dans une zone d'extrémité inférieure, présente un contour de support (19) s'appuyant sur un col (2a) de la tête sphérique (2) du dispositif d'attelage dans la position de fermeture de la mâchoire de serrage (6).

5. Système de support arrière selon la revendication 3, **caractérisé en ce que** pour chaque mâchoire de serrage (6) au moins une pente de guidage (15) respective est prévue, dans lequel les pentes de guidage (15) pour les mâchoires de serrage (6) mobiles dans le sens opposé sont orientées dans la symétrie de miroir par rapport à un axe vertical.

6. Système de support arrière selon la revendication 1 ou 3, **caractérisé en ce que** la structure de guidage pour les au moins deux mâchoires de serrage (6, 6a) présente des voies de guidage (9, 9a) s'étendant dans la direction verticale, lesdites voies guidant l'au moins un axe pivotant (8, 8a) des mâchoires de serrage (6, 6a) pour un déplacement dans la direction verticale par rapport à la structure de guidage.

7. Système de support arrière selon la revendication 6, **caractérisé en ce que** chaque axe pivotant (8, 8a) est prévu à proximité d'un palier lisse présentant des boulons de palier lisse, lesdits boulons faisant saillie, coaxialement par rapport à l'axe pivotant (8, 8a), vers des faces frontales opposées et étant guidés dans une voie de guidage (9, 9a) respective.

8. Système de support arrière selon l'une quelconque des revendications précédentes, **caractérisé en ce que** deux mâchoires de serrage (6a) sont prévues, montées de manière pivotante autour deux axes pivotants (8a) parallèles l'un à l'autre.

9. Système de support arrière selon la revendication 8, **caractérisé en ce que**, coaxialement par rapport à l'axe pivotant (8a) respectif, sur chaque mâchoire de serrage (6a) sont prévus deux boulons de palier lisse faisant saillie vers des faces opposées, lesdits boulons étant déplaçables dans la direction verticale dans des voies de guidage (9a) parallèles l'une à l'autre sur des côtés opposés de la structure de guidage.

10. Système de support arrière selon la revendication 9, **caractérisé en ce que**, sur chaque côté de la structure de guidage, à chaque fois deux voies de guidage (9a) sont fournies de sections de pente, la distance entre lesquelles - vue dans la direction verticale - augmentant constamment à partir d'une zone d'extrémité inférieure au moins sur une partie d'une longueur totale des voies de guidage (9a).

11. Système de support arrière selon la revendication 10, **caractérisé en ce que** les deux voies de guidage (9a) présentent, sur chaque côté de la structure de guidage, deux sections parallèles s'étendant dans la direction verticale, lesdites sections parallèles jouxtant les sections de pente des voies de guidage (9a) vers le haut.

12. Système de support arrière selon l'une quelconque des revendications 8 à 11, **caractérisé en ce que** chaque mâchoire de serrage (6a) présente une zone de tête (20) au-dessus de l'axe pivotant (8a), ladite zone de tête étant fournie d'au moins un profilé de centrage (23, 24) faisant face vers la mâchoire de serrage (6a) adjacente.

13. Système de support arrière selon la revendication 12, **caractérisé en ce que** le guidage forcé présente au moins un dispositif de support de tête agissant par élasticité de ressort, ledit dispositif chargeant les zones de tête (20) des mâchoires de serrage (6a) l'une contre l'autre.

14. Système de support arrière selon la revendication 13, **caractérisé en ce que** le dispositif de support de tête est opérant au-dessus de l'axe pivotant (8a).

15. Système de support arrière selon la revendication 13 ou 14, **caractérisé en ce que** le dispositif de support de tête présente au moins un ressort hélicoïdal de tension (21), tirant les zones de tête (20) des mâchoires de serrage adjacentes l'une contre l'autre.
